(19) Europäisches Patentamt
European Patent Office
Office européen des brevets

(11) **EP 3 476 678 B1**

## (12) EUROPEAN PATENT SPECIFICATION

(45) Date of publication and mention
of the grant of the patent:
**22.04.2020 Bulletin 2020/17**

(51) Int Cl.:
**B60T 17/22** *(2006.01)* **B60T 13/66** *(2006.01)*
**G01B 17/00** *(2006.01)*

(21) Application number: **17198651.6**

(22) Date of filing: **26.10.2017**

(54) **BRAKE PIPE LENGTH ESTIMATION**

BREMSLEITUNGSLÄNGENSCHÄTZUNG

ESTIMATION DE LONGUEUR DE TUYAU DE FREIN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.05.2019 Bulletin 2019/18**

(73) Proprietor: **KNORR-BREMSE
Systeme für Schienenfahrzeuge GmbH
80809 München (DE)**

(72) Inventor: **BUSZNYÁK, Imre
H1148 Budapest (HU)**

(74) Representative: **Prüfer & Partner mbB
Patentanwälte · Rechtsanwälte
Sohnckestraße 12
81479 München (DE)**

(56) References cited:
**DE-A1-102010 011 949    JP-A- H0 875 441
JP-A- 2008 222 003**

**Description**

The present invention relates to a brake pipe length estimation device (BPLE device) and a method to detect the completeness of a brake pipe in a vehicle (especially a vehicle containing multiple cars, for example a train) by determining the effective length of the brake pipe, which also reflects the number of cars properly connected together in order to determine the completeness of the vehicle.

Document JP-08-75441-A shows a pipe length estimation device for determining a length of a pipe, based on measurement values including a pressure in time domain and resonance frequencies in the pipe. In document DE -10 2010 011949-A1 a method for determining a train length is described.

For example in case of a train, it is very dangerous when all cars of the train are not braked properly, when the brake pipe is not continuously permeable (e.g. closed between the locomotive and the last car) so that the closed part of train never senses the brake command. In this case, there are several kinds of solutions to detect the continuity of the brake pipe in the train. A first kind of solution detects the brake signal at the end of train, but has the disadvantage that a special device at the end of the train is necessary. A second kind of solution measures the mass flow of the compressed air inside the brake pipe at the locomotive and calculates the full volume of the brake pipe, but has the disadvantage that the device which measures the mass flow with good accuracy is complicated and expensive. A third kind of solution measures the time difference between a generated sound pulse and its echo when it returns from the end of brake pipe, but it is sensitive to various noises and gives less information than the present invention.

In a vehicle provided with an air brake system, especially a vehicle containing multiple cars, for example a train, each car has a piece of brake pipe filled with compressed air. The piece of brake pipe in each car will be connected with each other when the cars are connected together. Thus, a completeness of the brake pipe can be determined by the effective length of the (connected) brake pipe, which also reflects the number of cars properly connected together, i. e. the completeness of the vehicle.

Therefore, it is an object of the present invention to provide a device and a method which can detect the length / the completeness of a brake pipe, under the consideration that the device is easy to be implemented and delivers a reliable result.

This problem is solved with a brake pipe length estimation device according to claim 1 and a method for estimating the length of a brake pipe according to claim 7. Further advantageous developments of the invention are subject-matter of the dependent claims.

According to the invention, the effective length of the brake pipe can be determined by detecting resonance frequencies in the brake pipe, based on mathematical equations for resonance condition. A device according to the invention will be mounted to the brake pipe, by generating an additional air flow to the compressed air inside the brake pipe, a pressure wave can be caused, and by controlling the additional air flow, the frequency of the generated pressure wave can be varied until a resonance can be detected. A method according to the invention can use resonance frequencies detected by the device to calculate the effective length of the brake pipe and thus determine the completeness of the brake pipe.

The foregoing and other objects, aspects and advantages will be better understood from the following detailed description of a preferred embodiment of the invention with reference to the drawings, in which:

Fig. 1 is a diagram showing the major component parts of a BPLE device according to the invention;

Fig. 2 is a diagram showing an evaluation and control unit of the BPLE device according to the invention comprising a multi-harmonic signal generator;

Fig. 3 is a diagram showing an evaluation and control unit of the BPLE device according to the invention comprising a programmable band pass filter.

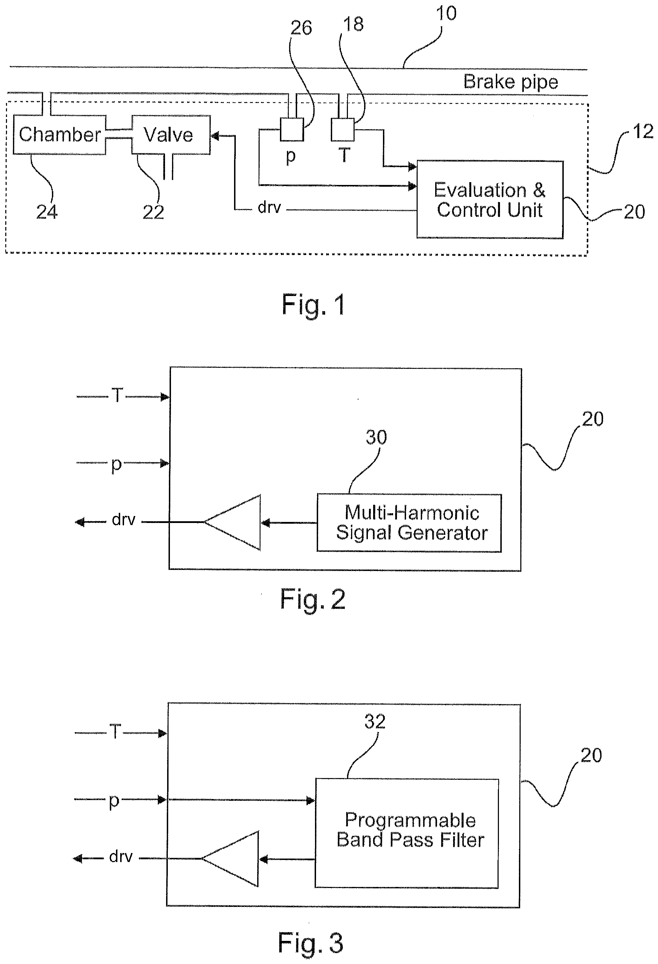

Fig. 1 shows a brake pipe 10 from a vehicle and a BPLE device 12 attached to it, comprising an evaluation and control unit 20, a proportional valve 22, an air chamber 24, a pressure sensor 26 and a temperature sensor 28.

The proportional valve 22 is configured to add an additional air flow into the brake pipe 10 to cause pressure waves inside the brake pipe 10. The evaluation and control unit 20 is configured to send the proportional valve 22 drive signals, to control the drive signals, and to evaluate sensed pressures from the pressure sensor 26. By controlling the drive signals, the frequency of the pressure waves inside the brake pipe 10 can be changed until resonance occurs. The temperature sensor 28 is provided to measure air temperature in the brake pipe 10 for calculating a sound velocity in the brake pipe.

A resonance detection means (not shown) is provided with the BPLE device 12 to continuously convert an energy spectrum of the sensed pressure wave into frequency domain so as to calculate the length from the detected amplitude peeks of pressure using them as the harmonic resonance points of brake valve.

Fig. 2 shows the evaluation and control unit 20 provided with a multi-harmonic signal generator 30 configured to drive the proportional valve 22 to add the brake pipe a multi-harmonic air flow (nearly white noise within a predefined spectrum) in the brake pipe 10.

Fig. 3 shows the evaluation and control unit 20 provided with a programmable band pass filter 32 configured to pass an amplified signal based on the detected pressure in the brake pipe 10 to the proportional valve 22 to add an additional air flow in the brake pipe 10. The evaluation and control unit 20 is configured to continuously change the pass frequency of the band pass filter 32 so that the amplified signal is a harmonic drive signal.

Additionally, a means (not shown) can be provided within the BPLE device 12 according to a further development of the present invention to derive the number of cars properly connected in the vehicle and thus determine the completeness of the vehicle.

In the following, a description will be given to explain the method to determine the length of the brake pipe.

When the temperature T in the brake pipe is known, the sound velocity V in the brake pipe can be calculated with:

$$V = V_0 * SQRT(T/T_0),$$

where Vo is the sound velocity in the air when the temperature is To and SQRT() is a square root function.

The frequency f and, the sound velocity V, and the wave length *lambda* has the relationship:

$$f = V/lambda.$$

When a resonance in the brake pipe occurs, the length *lambda* of the pressure wave in the brake pipe can be determined with:

$$lambda = 4*L/(2*n-1),$$

where L is the length of the brake pipe and n is the number of harmonic (1, 2, 3,...).

So the $n^{th}$ resonance frequency $f_n$ of the brake pipe can be calculated with:

$$f_n = (2*n-1)*V/(4*L).$$

When resonance frequency $f_n$ and the number of harmonic n are known, the length L of the brake pipe can be easily calculated. But in reality, when resonance occurs, the number of harmonic n is not easy to be measured. The method is therefore to detect at least two resonance frequency points to determine the length L of the brake pipe, which will be explained with an example as follows.

In a vehicle, the length L of the brake pipe can have only certain values, as shown in the following table as an example. In this case, take for example the temperature T in the brake pipe with T = 20.0 °C, then the sound velocity V in the brake pipe is V = 319.8 m/s. For each n (n = 1, 2, ..., 6), the resonance frequency $f_n$ can be calculated as shown in the following table.

|  | resonance frequency [Hz] | | | | | |
|---|---|---|---|---|---|---|
| L[m] | n=1 | n=2 | n=3 | n=4 | n=5 | n=6 |
| 16.2 | 4.950 | 14.851 | 24.752 | 34.653 | 44.554 | 54.455 |
| 32.3 | 2.476 | 7.426 | 12.376 | 17.327 | 22.277 | 27.227 |
| 48.5 | 1.650 | 4.950 | 8.251 | 11.551 | 14.851 | 18.152 |
| 242.3 | 0.330 | 0.990 | 1.650 | 2.310 | 2.970 | 3.630 |
| 323.0 | 0.248 | 0.743 | 1.238 | 1.733 | 2.228 | 2.723 |
| 403.8 | 0.198 | 0.594 | 0.990 | 1.386 | 1.782 | 2.178 |
| 484.5 | 0.165 | 0.495 | 0.825 | 1.155 | 1.485 | 1.815 |
| 565.3 | 0.141 | 0.424 | 0.707 | 0.990 | 1.273 | 1.556 |
| 646.0 | 0.124 | 0.371 | 0.619 | 0.866 | 1.114 | 1.361 |
| 726.8 | 0.110 | 0.330 | 0.550 | 0.770 | 0.990 | 1.210 |
| 807.5 | 0.099 | 0.297 | 0.495 | 0.693 | 0.891 | 1.089 |

(continued)

| | resonance frequency [Hz] | | | | | |
|---|---|---|---|---|---|---|
| L[m] | n=1 | n=2 | n=3 | n=4 | n=5 | n=6 |
| 888.3 | 0.090 | 0.270 | 0.450 | 0.630 | 0.810 | 0.990 |
| 969.0 | 0.083 | 0.248 | 0.413 | 0.578 | 0.743 | 0.908 |

When the occurrence of a resonance in the brake pipe is detected and the resonance frequency is measured, by comparing the found resonance frequency with the theoretically calculated resonance frequency in the table, the length of the brake pipe can be determined. Since in some cases, the theoretically calculated resonance frequencies for different length values are identical or very similar, it is advantageous to measure at least two resonance frequency points in the brake pipe for a more reliable determination of the brake pipe length.

The detection of the occurrence of resonance is based on the looking for the peeks of amplitude. The frequencies of the detected amplitude Af peeks are valid if the found n-harmonic frequency fn values meet with the brake pipe (characterized by L and V) equation:

$$f_n = (2*n-1)*V/(4*L) \quad \Rightarrow \quad L = (2*n-1)*V/(4* f_n)$$

The length calculation solves the multi unknown equation.

The amplitude value $A_f$ of a selected frequency $f$ can be calculated by this equation:

$$A_f = \frac{2 * \Delta t}{Tmea} * \sqrt{\left(\sum_{t=0}^{Tmea} p(t) * sin(t * f * 2\pi)\right)^2 + \left(\sum_{t=0}^{Tmea} p(t) * cos(t * f * 2\pi)\right)^2}$$

where *Tmea* is the measurement time needed, *p(t)* is the pressure measured in the brake pipe according to the time *t*, *f* is the frequency harmonic value for amplitude calculation, where *p(t)* values are sampled by *Δt* period time.

This simplified calculation gives accurate amplitude value of harmonic only if the measurement time *Tmea* is equal to an integer N (N = 1, 2, 3, ...) and the period time T (T = 1/f) of the harmonic (reciprocal of the frequency that is looked for) product:

$$Tmea = N / f.$$

## Claims

1. Brake pipe length estimation device (12) for determining a length of a brake pipe (10) of said vehicle, based on measurement values including a pressure in time domain and resonance frequencies in the brake pipe (10), comprising:

   - a proportional valve (22) being connectable to the brake pipe (10) of the vehicle and being configured to generate an additional air flow to the air in the brake pipe (10) to form pressure waves in said brake pipe,
   - an evaluation and control unit (20) for being connected to said brake pipe, which is configured to control drive signals for the proportional valve (22) and comprises a pressure sensor (26) for measuring the pressure in time domain in said brake pipe, and
   - a resonance detection means being configured to detect occurrences of resonance and resonance frequencies in said brake pipe.

2. Brake pipe length estimation device (12) according to claim 1, **characterized in that** the evaluation and control unit (20) of said device comprises a multi-harmonic signal generator (30) for generating a multi-harmonic signal as drive signal for the proportional valve (22),

3. Brake pipe length estimation device (12) according to claim 1, **characterized in that**
the evaluation and control unit (20) of said device comprises a programmable band pass filter (32) for generating an amplified feedback of sensed pressures in the brake pipe (10) as drive signal for the proportional valve (22), and the evaluation and control unit (20) is configured to continuously change a pass frequency of the band pass filter (32) so that the drive signal is a harmonic signal.

4. Brake pipe length estimation device (12) according to any of the proceeding claims, **characterized in that** the resonance detection means is configured to calculate a frequency spectrum of sensed pressures in the brake pipe (10) to identify occurrences of resonance and to determine resonance frequencies.

5. Brake pipe length estimation device (12) according to any of the proceeding claims, **characterized in that** the evaluation and control unit (20) of said device comprises a temperature sensor (28) for sensing the air temperature in the brake pipe (10).

6. Brake pipe length estimation device (12) according to any of the proceeding claims, **characterized in that** a means is provided for deriving the number of cars in the vehicle, so that the completeness of the vehicle can be determined.

7. Method for detecting a length of a brake pipe (10), based on measurement values including pressures in time domain and resonance frequencies in said brake pipe, comprising:

   - generating an additional air flow in the brake pipe (10) to form pressure waves;
   - measuring pressures in time domain in said brake pipe;
   - detecting occurrences of resonance in said brake pipe and determining resonance frequency points;
   - deriving the length of said brake pipe according to the resonance frequency points.

8. Method according to claim 7, **characterized in that** a temperature in said brake pipe is measured and the sound velocity in the air inside the brake pipe is calculated according to the measured temperature.

9. Method according to claim 7 or 8, **characterized in that** a multi-harmonic signal is used to generate the additional air flow in the brake pipe (10).

10. Method according to claim 7 or 8, **characterized in that** a signal based on an amplified feedback of the actual measured pressure in the brake pike (10) is used to generate the additional air flow in the brake pipe (10).

11. Method according to any of the proceeding method claims 7 to 10, **characterized in that** a frequency spectrum of sensed pressures in the brake pipe (10) is calculated to identify occurrences of resonance and to determine resonance frequencies.

12. Method according to any of the proceeding method claims 7 to 10, **characterized in that** peek amplitudes of the pressure waves in the brake pipe (10) are detected to determine resonances.

13. Method according to any of the proceeding method claims 7 to 12, **characterized in that** the number of cars in the vehicle is calculated accordingly, so as to determine the completeness of the vehicle.

**Patentansprüche**

1. Schätzungsvorrichtung (12) für Bremsleitungslänge zur Bestimmung einer Länge einer Bremsleitung (10) des besagten Fahrzeugs auf der Basis von Messwerten einschließlich eines Druckes im Zeitbereich und der Resonanzfrequenzen in der Bremsleitung (10), die Vorrichtung umfassend:

   - ein Proportionalventil (22), das an die Bremsleitung (10) des Fahrzeugs angeschlossen werden kann und zur Erzeugung eines zusätzlichen Luftstroms zur Luft in der Bremsleitung (10) zur Bildung von Druckwellen in der besagten Bremsleitung ausgelegt ist,
   - eine Auswertungs- und Steuereinheit (20) zum Anschluss an die besagte Bremsleitung, die zur Steuerung von Antriebssignalen für das Proportionalventil (22) ausgelegt ist und einen Drucksensor (20) zur Messung des Druckes im Zeitbereich in der besagten Bremsleitung umfasst, und
   - ein Resonanzerfassungsmittel, das zur Erfassung von Resonanzereignissen und Resonanzfrequenzen in der besagten Bremsleitung ausgelegt ist.

**2.** Schätzungsvorrichtung (12) für Bremsleitungslänge nach Anspruch 1, **dadurch gekennzeichnet, dass** die Auswertungs- und Steuereinheit (20) der besagten Vorrichtung einen multiharmonischen Signalgenerator (30) zur Erzeugung eines multiharmonischen Signals als Antriebssignal für das Proportionalventil (22) umfasst.

**3.** Schätzungsvorrichtung (12) für Bremsleitungslänge nach Anspruch 1, **dadurch gekennzeichnet, dass**
die Auswertungs- und Steuereinheit (20) der besagten Vorrichtung einen programmierbaren Bandpassfilter (32) zur Erzeugung einer verstärkten Rückmeldung von erfassten Drücken in der Bremsleitung (10) als Antriebssignal für das Proportionalventil (22) umfasst, und
dass die Auswertungs- und Steuereinheit (20) zur kontinuierlichen Änderung einer Passfrequenz des Bandpassfilters (32) ausgelegt ist, so dass das Antriebssignal ein harmonisches Signal ist.

**4.** Schätzungsvorrichtung (12) für Bremsleitungslänge nach einem der vorhergehenden Ansprüche, **dadurch gekennzeichnet, dass** das Resonanzerfassunsmittel zur Berechnung eines Frequenzspektrums der erfassten Drücke in der Bremsleitung (10) zwecks Erkennung von Resonanzereignissen und Bestimmung von Resonanzfrequenzen ausgelegt ist.

**5.** Schätzungsvorrichtung (12) für Bremsleitungslänge nach einem der vorhergehenden Ansprüche, **dadurch gekennzeichnet, dass** die Auswertungs- und Steuereinheit (20) der besagten Vorrichtung einen Temperatursensor (28) zum Erfassen der Lufttemperatur in der Bremsleitung (10) umfasst.

**6.** Schätzungsvorrichtung (12) für Bremsleitungslänge nach einem der vorhergehenden Ansprüche, **dadurch gekennzeichnet, dass** ein Mittel zur Ableitung der Anzahl von Wagen im Fahrzeug vorgesehen ist, so dass die Vollständigkeit des Fahrzeugs bestimmt werden kann.

**7.** Verfahren zur Erfassung einer Länge einer Bremsleitung (10) auf der Basis von Messwerten, einschließlich von Drücken im Zeitbereich und Resonanzfrequenzen in der besagten Bremsleitung, das Verfahren umfassend:

- die Erzeugung eines zusätzlichen Luftstroms in der Bremsleitung (10) zur Bildung von Druckwellen;
- das Messen von Drücken im Zeitbereich in der besagten Bremsleitung;
- das Erfassen von Resonanzereignissen in der besagten Bremsleitung und die Bestimmung von Resonanzfrequenzpunkten;
- das Ableiten der Länge der besagten Bremsleitung gemäß den Resonanzfrequenzpunkten.

**8.** Verfahren nach Anspruch 7, **dadurch gekennzeichnet, dass** eine Temperatur in der besagten Bremsleitung gemessen wird und die Schallgeschwindigkeit der Luft in der Bremsleitung gemäß der gemessenen Temperatur berechnet wird.

**9.** Verfahren nach Anspruch 7 oder 8, **dadurch gekennzeichnet, dass** zur Erzeugung des zusätzlichen Luftstroms in der Bremsleitung (10) ein multiharmonisches Signal benutzt wird.

**10.** Verfahren nach Anspruch 7 oder 8, **dadurch gekennzeichnet, dass** zur Erzeugung des zusätzlichen Luftstroms in der Bremsleitung (10) ein Signal auf der Basis einer verstärkten Rückmeldung des gemessenen Istdruckes in der Bremsleitung (10) benutzt wird.

**11.** Verfahren nach einem der vorhergehenden Ansprüche 7 bis 10, **dadurch gekennzeichnet, dass** zur Erkennung von Resonanzereignissen und zur Bestimmung von Resonanzfrequenzen ein Frequenzspektrum von erfassten Drücken in der Bremsleitung (10) berechnet wird.

**12.** Verfahren nach einem der vorhergehenden Ansprüche 7 bis 10, **dadurch gekennzeichnet, dass** zur Bestimmung von Resonanzen Spitzenamplituden der Druckwellen in der Bremsleitung (10) erfasst werden.

**13.** Verfahren nach einem der vorhergehenden Ansprüche 7 bis 12, **dadurch gekennzeichnet, dass** zur Bestimmung der Vollständigkeit des Fahrzeugs die Anzahl der Wagen im Fahrzeug entsprechend berechnet wird.

**Revendications**

1. Dispositif (12) d'estimation de la longueur d'une tuyauterie de frein pour déterminer une longueur d'une tuyauterie (10) de frein du véhicule, sur la base de valeurs de mesure incluant une pression dans le domaine temporel et des fréquences de résonance dans la tuyauterie (10) de frein, comprenant :

   - une soupape (22) proportionnelle pouvant être reliée à la tuyauterie (10) de frein du véhicule et configurée pour produire un courant d'air supplémentaire à l'air dans la tuyauterie (10) de frein pour former des ondes de pression dans la tuyauterie de frein,
   - une unité (20) d'évaluation et de commande à connecter à la tuyauterie de frein, qui est configurée pour commander des signaux de commande de la soupape (22) proportionnelle et qui comprend un capteur (26) de pression pour mesurer la pression dans le domaine temporel dans la tuyauterie de frein, et
   - un moyen de détection de la résonance, configuré pour détecter des apparitions de la résonance et des fréquences de résonance dans la tuyauterie de frein.

2. Dispositif (12) d'estimation de la longueur d'une tuyauterie de frein suivant la revendication 1, **caractérisé en ce que** l'unité (20) d'évaluation et de commande du dispositif comprend un générateur (30) d'un signal à plusieurs harmoniques pour produire un signal à plusieurs harmoniques comme signal de commande de la soupape (22) proportionnelle.

3. Dispositif (12) d'estimation de la longueur d'une tuyauterie de frein suivant la revendication 1, **caractérisé en ce que** l'unité (20) d'évaluation de commande du dispositif comprend un filtre (32) passe-bande programmable pour produire une réaction amplifiée de pression détectée dans la tuyauterie (10) de frein comme signal de commande de la soupape (22) proportionnelle, et
   l'unité (20) d'évaluation et de commande est configurée pour changer continuellement une fréquence de passage du filtre (32) passe-bande, de manière à ce que le signal de commande soit un signal d'harmonique.

4. Dispositif (12) d'estimation de la longueur d'une tuyauterie de frein suivant l'une quelconque des revendications précédentes, **caractérisé en ce que** le moyen de détection de la résonance est configuré pour calculer un spectre de fréquence de pression détectée dans la tuyauterie (10) de frein, afin d'identifier des apparitions de résonance et afin de déterminer des fréquences de résonance.

5. Dispositif (12) d'estimation de la longueur d'une tuyauterie de frein suivant l'une quelconque des revendications précédentes, **caractérisé en ce que** l'unité (20) d'évaluation et de commande du dispositif comprend une sonde (28) de température pour détecter la température de l'air dans la tuyauterie (10) de frein.

6. Dispositif (12) d'estimation de la longueur d'une tuyauterie de frein suivant l'une quelconque des revendications précédentes, **caractérisé en ce qu'**il est prévu un moyen pour déduire le nombre de voitures dans le véhicule, de manière à pouvoir déterminer que le véhicule est complet.

7. Procédé de détection d'une longueur d'une tuyauterie (10) de frein reposant sur des valeurs de mesure incluant des pressions dans le domaine temporel et des fréquences de résonance dans la tuyauterie de frein, dans lequel :

   - on produit un courant d'air supplémentaire dans la tuyauterie (10) de frein pour former des ondes de pression ;
   - on mesure des pressions dans le domaine temporel dans la tuyauterie de frein ;
   - on détecte des apparitions de résonance dans la tuyauterie de frein et on détermine des points de fréquence de résonance ;
   - on déduit la longueur de la tuyauterie de frein en fonction des points de fréquence de résonance.

8. Procédé suivant la revendication 7, **caractérisé en ce que** l'on mesure une température dans la tuyauterie de frein et on calcule la vitesse du son dans l'air à l'intérieur de la tuyauterie de frein en fonction de la température mesurée.

9. Procédé suivant la revendication 7 ou 8, **caractérisé en ce que** l'on utilise un signal à plusieurs harmoniques pour produire le courant d'air supplémentaire dans la tuyauterie (10) de frein.

10. Procédé suivant la revendication 7 ou 8, **caractérisé en ce que** l'on utilise un signal reposant sur une réaction amplifiée de la pression réelle mesurée dans la tuyauterie (10) de frein pour produire le courant d'air supplémentaire dans la tuyauterie (10) de frein.

**11.** Procédé suivant l'une quelconque des revendications de procédé 7 à 10 précédentes, **caractérisé en ce que** l'on calcule un pic de fréquence de pression détectée dans la tuyauterie (10) de frein pour identifier des apparitions de résonance et pour déterminer des fréquences de résonance.

**12.** Procédé suivant l'une quelconque des revendications de procédé 7 à 10 précédents, **caractérisé en ce que** l'on détecte des amplitudes de crête des ondes de pression dans la tuyauterie (10) de frein pour déterminer des résonances.

**13.** Procédé suivant l'une quelconque des revendications de procédé 7 à 12 précédentes, **caractérisé en ce que** l'on calcule le nombre de voitures dans le véhicule en conséquence, de manière à déterminer que le véhicule est complet.

Fig. 1

Fig. 2

Fig. 3

**EP 3 476 678 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8075441 A

- DE 102010011949 A1